# EUROPÄISCHE PATENTSCHRIFT

(11) **EP 1 018 677 B1**
(45) Veröffentlichungstag und Bekanntmachung des Hinweises auf die Patenterteilung: **08.03.2006**
(21) Anmeldenummer: 99121530.2
(22) Anmeldetag: 29.10.1999
(51) Int. Cl.: G05B 19/4069, G05B 19/4068, G05B 19/409

(54) **Virtuelles Teach-In-System**
Virtual teaching system
Système virtuel d'apprentissage

(30) Priorität: 05.01.1999 DE 19900117
(43) Veröffentlichungstag der Anmeldung: 12.07.2000
(73) Patentinhaber: Walter Maschinenbau GmbH, 72072 Tübingen (DE)
(72) Erfinder: Dilger, Christian, 70771 Leinfelden-Echterdingen (DE); Huben, Frieder, 72116 Mössingen (DE)
(74) Vertreter: Rüger, Barthelt & Abel Patentanwälte

(56) Entgegenhaltungen:
- EP-A- 0 513 369
- WO-A-98/38552
- DE-A- 4 228 702
- DE-A- 19 506 204
- DE-A- 19 625 542
- GB-A- 2 140 937
- US-A- 5 046 022
- US-A- 5 051 912

## Beschreibung

Die Erfindung betrifft allgemein ein System zur Erzeugung, Veränderung und/oder Visualisierung von Programmen zur Steuerung von Schleifmaschinen.

Werkzeugmaschinen sind in der Regel programmgesteuert, d.h. an einem Werkstück vorzunehmende Bearbeitungsvorgänge laufen programmgesteuert ab. Zur Erzeugung einer Relativbewegung zwischen dem Werkzeug und dem Werkstück sind in der Regel mehrere NC-Achsen vorgesehen. Bspw. ist ein Schleifkopf auf einer entsprechenden Linearführung gelagert, die ihrerseits mit einem NC-gesteuerten Antrieb (NC = Numerisch controlled) versehen ist. Durch Betätigung ein oder mehrerer solcher Achsen entsteht eine Zustellbewegung. Bspw. beim Schleifen von Spiralnuten an Bohrwerkzeugen ist eine Überlagerung mehrerer Bewegungskomponenten erforderlich, um eine geeignete Relativbewegung zwischen dem Werkstück und dem Werkzeug zu erreichen.

Numerisch gesteuerte Werkzeugmaschinen und Steuerungsprogramme für diese sind bekannt. Bspw. offenbart die EP 0530364 A1 eine interaktive numerische Steuerung, die auf einem Monitor eine Darstellung eines Werkstücks anhand vorhandener NC-Daten erbringt. Eine interaktive Änderung der NC-Daten kann unmittelbar zur Anzeige gebracht werden. Damit werden Auswirkungen von Datenänderungen sofort sichtbar. Zu dem System gehören Speichermittel, Rechenmittel, Anzeigemittel und Eingabemittel. Anhand der Darstellung des Bearbeitungsprozesses auf einem Monitor, können die NC-Daten direkt auf dem Schirm korrigiert werden.

Die Programmierung von NC-Maschinen erfordert in der Regel gewisse Kenntnisse sowohl über die verwendete Programmiersprache als auch über die speziellen Gegebenheiten bei der Bearbeitung bestimmter Flächen des Werkstücks.

Die US-A-5046022 offenbart ein Echtzeitsimulationssystem mit dem ein Manipulator gesteuert und programmiert werden kann. Der Manipulator befindet sich in dem Blickfeld einer Kamera, deren Bild auf einem Bildschirm wiedergegeben wird. In der Leitung zwischen der Kamera und dem Bildschirm ist ein Mischer angeordnet, über den sich simulierte Bilder in die Bildschirmdarstellung einblenden lassen. Der Manipulator ist über einen Steuerhebel (Joy Stick) steuerbar. Die Bewegungen des Manipulators sind auf dem Bildschirm zu verfolgen. Zwischen dem Steuerhebel und der Steuerung des Manipulators ist ein Simulationsmodul angeordnet, das dazu dient, Steuerhebelvorgaben, bevor an den Manipulator weiter gegeben werden, virtuell vorwegzunehmen und über den Mischer als künstlich generierte Bilder in die Bildschirmdarstellung einzublenden. Damit wird es möglich, Verfahrwege des Manipulators auf Kollisionsfreiheit auszutesten, bevor sie von dem Manipulator wirklich durchlaufen werden.

Die EP-A-513369 offenbart eine nummerisch gesteuerte Einrichtung zur Simulation eines Bearbeitungsvorgangs einer spanenden Bearbeitungsmaschine auf einem Bildschirm. Damit kann die durch ein NC-Programm vorgegebene Bearbeitung eines Werkstücks auf einem Bildschirm visualisiert werden. Dabei muss von einem gegebenen NC-Programm ausgegangen werden. Die Erstellung von NC-Programmen setzt jedoch geübtes Personal voraus und stellt einen erheblichen Kosten- und Zeitfaktor dar.

Die GB-A-2140937 offenbart ein System zur Simulation eines Werkzeugmaschine, wobei das System die Kollisionsfreiheit eines gegebenen NC-Programms testet. Es wird dabei von einem gegebenen NC-Programm ausgegangen.

Aus der DE-A-195 06 204 geht eine Werkzeugschleifmaschine hervor, deren Achsen nummerisch gesteuert sind. Eine Steuereinrichtung erzeugt die entsprechenden Stellsignale. Die Vorgabe einer Relativbewegung zwischen dem Werkzeug und Werkstück erfolgt über ein einziges Steuerorgan, wie beispielsweise ein elektronisches Handrad. Dies stellt eine Programmierungserleichterung dar.

Aus der DE-A-197 39 559 sind die Merkmale des Oberbegriffs des Patentanspruchs 1 bekannt. Die Druckschrift offenbart ein Verfahren und ein System zum Erstellen sowie zum Visualisieren von Steuerdatensätzen. Zur Erstellung der Steuerdatensätze werden eine Funktionseinheit und ein Werkstück auf einem Bildschirm dargestellt und relativ zueinander bewegt. Bei der Funktionseinheit kann es sich um ein Werkzeug handeln. Anhand der virtuellen Aktionen der Funktionseinheiten werden die Steuerdatensätze zur späteren Steuerung einer Werkzeugmaschine erzeugt und andererseits die sich an dem Werkstück ergebenden Veränderungen berechnet und dargestellt.

Dieses System gestattet es dem in der NC-Sprache nicht geübten Bediener, Steuerdatensätze zu erstellen.

Es ist Aufgabe der Erfindung, die Bedienung von NC-Maschinen zu erleichtern.

Diese Aufgabe wird mit dem System gelöst, das die Merkmale des Patentanspruchs 1 aufweist. Das erfindungsgemäße System weist ein Teach-In-Modul auf, das bspw. durch ein auf einer geeigneten Hardware laufendes Programm gebildet sein kann. Das Teach-In-Modul gestattet eine visuelle, vorzugsweise dreidimensionale Darstellung eines Werkstücks und eines Werkzeugs. Dies ist auch dann möglich, wenn noch keinerlei Maschinensteuerprogramm vorhanden ist. Es werden dann als Werkstück bspw. ein Rohling oder ein nicht vollständig bearbeitetes Werkzeug dargestellt. Der Rohling oder das teilbearbeitete Werkzeug können bspw. in einer Bibliothek bereitgehalten und dieser entnommen sein. Alternativ kann an dem Teach-In-Modul eine Möglichkeit vorgesehen sein, Rohlinge oder Ausgangskörper zur Herstellung von Werkzeugen aus einfachen geometrischen Grundformen, wie Zylindern, Quadern, Würfeln oder dgl., zusammenzusetzen. Das Teach-In-Modul kann mit entsprechenden Skalierungsfunktionen versehen sein, um die visuelle Darstellung der Werkzeuge, Rohlinge oder Grundköper zu einer gewünschten Größe und einem erforderlichen Maßverhältnis zu bringen.

Das Teach-In-Modul ist dazu eingerichtet, auf entsprechende manuelle Eingaben eine vom Bediener vorgegebene Relativbewegung des Werkstücks und des Werkzeugs in Bezug aufeinander visuell darzustellen. Bspw. können die Bewegungen als Einzelbewegungsschritte oder als einem vorgegebenen Weg folgende Bewegungen eingegeben werden. Die Vorgabe eines Wegs kann bspw. anhand von in einer Bibliothek bereitgehaltenen typischen Wegen, bspw. Geraden, Schraubenlinien oder ähnlichen Wegen erfolgen. Hier kann wiederum eine Skalierungsfunktion vorgesehen sein. Darüber hinaus wird es als zweckmäßig angesehen, eine wahlfreie schrittweise Positionierung oder auch eine wahlfreie Eingabe eines Bewegungswegs zu ermöglichen. Hier können Glättungsfunktionen über einen manuell eingegebenen Weg gelegt werden.

Ein Bestandteil des Teach-In-Moduls liegt darin, dass anhand der in das Teach-In-Modul eingegebenen Relativbewegung zwischen einer Darstellug des Werkzeugs und einer Darstellung des Werkstücks ein Maschinensteuerprogramm erzeugt oder abgeändert wird. Während das Teach-In-Modul den sich durch die Relativbewegung zwischen dem Werkstück ergebenden Bearbeitungsfortschritt, d.h. die an dem Rohling, bspw. mittels einer Schleifscheibe, virtuell erzeugten Ausnehmungen anzeigt, werden gleichzeitig die Maschinensteuerdaten erzeugt, die einer solchen Bearbeitung entsprechen. Auf diese weise kann durch virtuelles Teach-In das Maschinensteuerprogramm erzeugt werden. Ist das Maschinensteuerprogramm bereits vorhanden, kann es durch das virtuelle Teach-In-Verfahren abgewandelt werden. Damit vereinfacht sich die Bedienung einer entsprechenden numerisch gesteuerten Werkzeugmaschine erheblich. Es gestattet auf einfache Weise die Manipulation von Maschinensteuerprogrammen, die sowohl die Bewegungsabfolge als auch die Geschwindigkeiten der Achsen einer Schleifmaschine als auch Zustandsänderungen an den Eingängen einer Steuereinheit, bspw. einer SPS-Steuereinheit beschreiben (bspw. das Ein- und Ausschalten der Kühlmittelventile oder der Schleifscheibenspindel). Solche Maschinensteuerprogramme bestehen in der Regel aus einer Aneinanderreihung von Einzelbefehlen über Einzelbewegungen der Maschinenachsen sowie aus SPS-Steuerkommandos. Programmzeilen und aus mehreren Programmzeilen gebildete Programmblöcke steuern die Bewegung einer oder mehrerer Achsen zwischen zwei Punkten im Raum. Das virtuelle Teach-In-Modul gestattet nun bspw. die Veränderung bestehender Programmzeilen bzw. bestehender, aus mehreren Programmzeilen zusammengesetzter Blöcke, die Hinzufügung neuer Programmzeilen bzw. Blöcke sowie das Löschen vorhandener Programmzeilen bzw. Blöcke.

Dazu weist das virtuelle Teach-In-Modul vorzugsweise ein Speichermittel auf, das zur Speicherung von Werkstückdaten, zur Speicherung von Werkzeugdaten und zur Speicherung von Arbeitsanweisungen über die Relativbewegungen zwischen Werkzeug und Werkstück eingerichtet ist. Dazu ist bspw. ein hardwaretechnisch vorhandener Speicher unter die Verwaltung eines entsprechenden Programms oder Programmabschnitts gestellt, der auf einem geeigneten Rechner abgearbeitet wird. Dieser enthält außerdem ein Rechenmittel, zu dem ein entsprechender Programmabschnitt sowie die das Programm bzw. den Programmabschnitt abarbeitende Hardware gehört. Das Rechenmittel verarbeitet die in dem Speichermittel vorhandenen und von diesem bereitgestellten Arbeitsanweisungen, um die Werkstückdaten und/oder die Werkzeugdaten den Arbeitsanweisungen gemäß so zu verändern oder zu ergänzen, wie es einer Bearbeitung des Werkstücks durch das Werkzeug gemäß der durch die Arbeitsanweisungen festgelegten Relativbewegung entspricht. Auf diese Weise kann bspw. ein Materialabtrag und/oder optional auch Werkzeugverschleiß modelliert werden. Dieser wird mittels des Anzeigemittels dargestellt, zu dem eine Anzeigeeinrichtung und das entsprechende Programm gehören, das dazu dient, Daten auf der Anzeigeeinrichtung grafisch sichtbar zu machen. Ein Eingabemittel dient der Erfassung von gewünschten Relativbewegungen zwischen Werkzeug und Werkstück, die in entsprechende Arbeitsanweisungen umgesetzt werden, die wiederum von dem Speichermittel ab- oder zwischengespeichert werden. Zu dem Eingabemittel können Eingabegeräte sowie ein Wiedergabegerät gehören, auf dem virtuelle Eingabeknöpfe oder ähnliches darstellbar sind.

Bei einer vorteilhaften Ausführungsform ist außerdem ein Transformationsmittel vorhanden, das die so erzeugten Arbeitsanweisungen in ein Maschinensteuerprogramm umsetzt. Alternativ können die Arbeitsanweisungen direkt einem Maschinensteuerprogramm entsprechen, so dass eine Transformation entfallen kann.

Bei der Manipulation der von dem virtuellen Teach-In-Modul gegebenen Darstellung wird das Maschinensteuerprogramm generiert und/oder verändert. Dies kann sowohl die oben genannten qualitativen Eingriffe und Veränderungen des Maschinensteuerprogramms, als auch Änderungen der Daten beinhalten, die einzelnen Programmzeilen zugeordnet sind.

Das Eingabemittel, das bspw. durch ein spezielles Eingabegerät oder ein Eingabegerät in Verbindung mit auf einem Bildschirm dargestellten Eingabefeldern gebildet ist, kann sowohl einzelnen Maschinenachsen zugeordnete Bedienfelder als auch Bedienfelder für konfigurierbare Achsen enthalten, die nicht mit Maschinenachsen übereinstimmen. Dies vereinfacht die Bedienung weiter.

Das Teach-In-Modul kann in einem Simulationsmodul enthalten oder mit einem solchen verbunden sein, das die Darstellung der eingegebenen Bearbeitung nach Art eines Films gestattet. Bei einer vorteilhaften Ausführungsform ist die Simulation bedarfsweise auch schrittweise ausführbar sowie in Zeitlupe oder Zeitraffer durchlaufbar. Die Simulation kann unterbrochen und mit dem Teach-In-Modul korrigiert werden, falls dies erforderlich ist.

Außerdem ist ein Mittel vorgesehen, mit dem die sich ergebenden Werkstückabmessungen anhand der visuellen Darstellung bestimmbar sind. Solche Mittel können bspw. durch einen Cursor gebildet sein, mit dem willkürlich Punkte des Werkstücks auswählbar, d. h. ansprechbar sind, wobei das Mittel dann Maßbeziehungen zwischen den Punkten bestimmt.

Die von dem Anzeigemittel erbrachte Darstellung ist vorzugsweise eine 3D-Darstellung, die dem Betrachter einen räumlichen Eindruck des virtuell erzeugten Werkstücks vermittelt. Das erfindungsgemäße System kann bspw. auf einem separaten Rechner betrieben oder in die Steuerung einer NC-gesteuerten Maschine integriert sein. Im erstgenannten Fall können NC-Programme für NC-gesteuerte Maschinen interaktiv erstellt werden, wonach das so erstellte Programm auf die ansonsten herkömmliche NC-Maschine übertragen wird. Dazu können Datenträger oder Datenleitungen dienen.

Vorteilhafte Einzelheiten von Ausführungsformen der Erfindung ergeben sich aus der Zeichnung, der Beschreibung oder Unteransprüchen.

In der Zeichnung ist ein Ausführungsbeispiel der Erfindung veranschaulicht. Es zeigen:
- Fig. 1: ein System zur Erzeugung, Veränderung und/oder Visualisierung von Maschinensteuerungsprogrammen, in einer groben Übersichtsdarstellung;
- Fig. 2: eine Veranschaulichung einzelner zu dem Teach-In-Modul gehörender Elemente, in grober Übersichtsdarstellung;
- Fig. 3: den Datenfluß des Teach-In-Moduls als Blockschaltbild;
- Fig. 4: ein Element des Werkzeugsatzes, in schematisierter bildlicher Darstellung;
- Fig. 5: eine Schleifmaschine und deren reale sowie konfigurierbare Achse in einer schematisierten Draufsicht;
- Fig. 6: ein Bedienpanel zur Eingabe von gewünschten Relativbewegungen zwischen dem virtuellen Werkzeug und dem virtuellen Werkstück;
- Fig. 7 bis 9: jeweils eine Bildschirmdarstellung des virtuellen Werkzeugs und des virtuellen Werkstücks bei der Bewegungseingabe;
- Fig. 10: eine Bildschirmdarstellung des Werkzeugs und des Werkstücks bei der Eingabe gewünschter Bearbeitungsoperationen;
- Fig. 11: eine Bildschirmdarstellung der Maschine zur Durchführung der Bearbeitungsoperationen nach Fig. 7 bis 10;
- Fig. 12: ein Bedienpanel für das Simulationsmodul;
- Fig. 13: eine Bildschirmdarstellung während des Simula- tionslaufs;
- Fig. 14: einen Ausschnitt aus der Bildschirmdarstellung nach Fig. 13 und
- Fig. 15: die Bildschirmdarstellung eines SPS-Monitors.

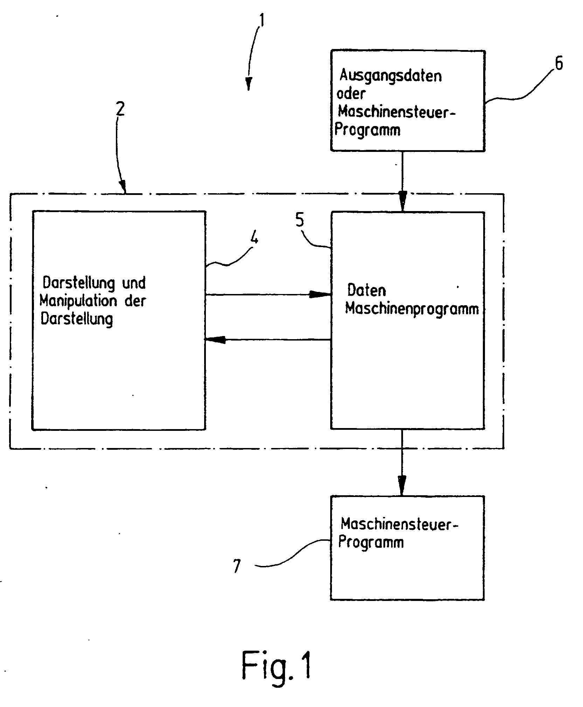

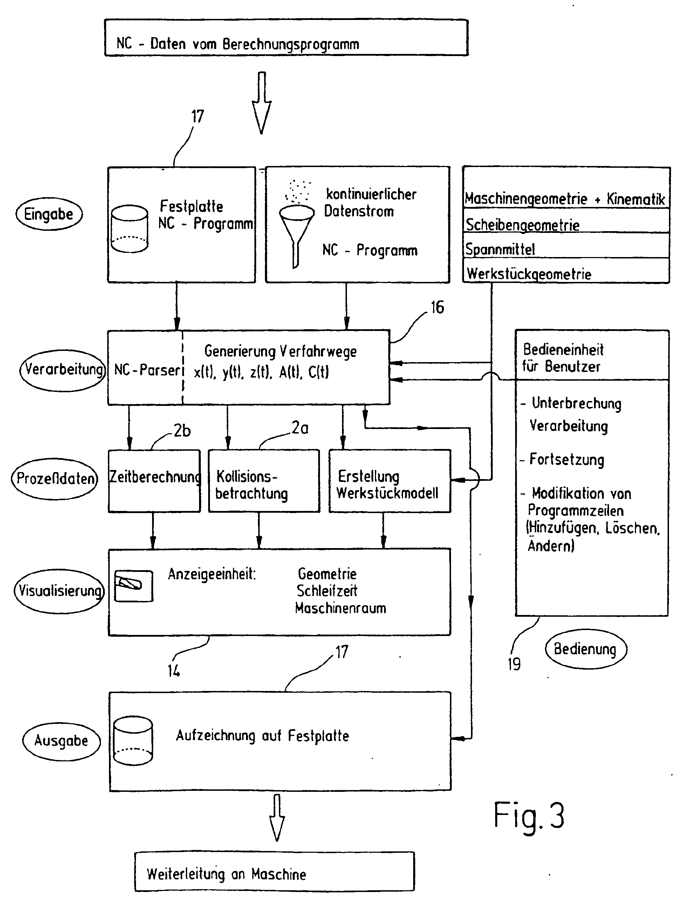

In Fig. 1 ist ein Teach-in-System 1 veranschaulicht, das der Erzeugung, Änderung und Visualisierung von Programmen zur Maschinensteuerung dient. Das System 1 weist ein Teach-In-Modul 2 auf, das zur interaktiven Erstellung von Maschinensteuerprogrammen dient. Das Teach-In-Modul 2 wird durch ein Computerprogramm und die zugrundeliegende Hardware gebildet. Es weist einen Programmteil 4 auf, der dazu eingerichtet ist, auf in Fig. 1 durch einen Block 5 schematisch gekennzeichnete Daten und ein Maschinensteuerprogramm einzuwirken. Das Teach-In-Modul weist einen aus Figur 3 ersichtlichen Kollisions-Modul 2a sowie ein Zeitberechnungsmodul 2b auf. Das Kollisions-Modul 2a dient dazu, unerwünschte Zusammenstöße zwischen
Werkzeug und Werkstück, die keine Berührung im Sinne einer (spanenden) Werkstückbearbeitung darstellen, zu ermitteln. Das Zeitberechnungsmodul 2b dient der Bestimmung der Bearbeitungszeit, die sich bei tatsächlicher Abarbeitung des Maschinensteuerprogramms ergeben wird. Die Daten können dem Teach-In-Modul 2 aus einem Block 6 zugeführt worden sein, der bspw. Daten enthalten kann, die ein unbearbeitetes Werkstück abbilden. Sind die Ausgangsdaten von dem Block 6 an den Block 5 übergeben, werden diese von dem Block 5 dem Teach-In-Modul 2 zur Darstellung und Manipulation der Darstellung übergeben. Anhand der Manipulation der Darstellung wird wiederum auf die Daten und das Maschinenprogramm in Block 5 zurückgewirkt bis der gewünschte Datensatz und das gewünschte Maschinenprogramm erzeugt ist. Dieses wird dann als Maschinensteuerprogramm ausgegeben wie in Fig. 1 durch einen Block 7 veranschaulicht ist.

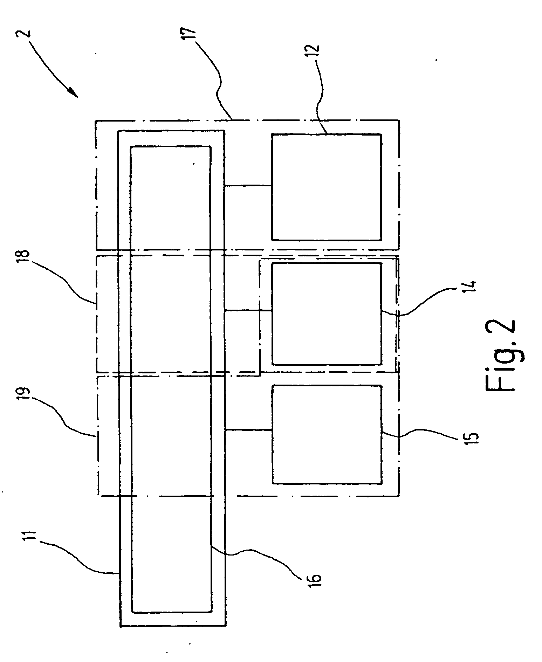

Zu dem Teach-In-Modul 2 gehören, wie Fig. 2 veranschaulicht, ein Rechner mit einer Steuerungs- und Verarbeitungseinheit, die eine Recheneinheit 11 bildet, ein Speicher 12, ein Monitor 14 und ein Eingabegerät 15. Der Speicher 12 bildet mit einem Abschnitt eines auf der Recheneinheit 11 laufenden Programms 16 eine Speichereinheit 17 zur Speicherung von Werkstückdaten, Werkzeugdaten und Anweisungen, die eine Relativbewegung zwischen Werkzeug und Werkstück kennzeichnen. Ein weiterer Abschnitt des Programms 16 bildet mit dem Monitor 14 ein Anzeigemittel 18 zur Visualisierung des Werkstücks, des Werkzeugs und der Relativposition von Werkstück und Werkzeug zueinander. Die Bedienung des Teach-In-Systems erfolgt über einen weiteren Abschnitt des Programms 16 in Verbindung mit dem Eingabegerät 15 und dem Monitor 14. Der betreffende Programmabschnitt bildet mit dem Eingabegerät 15 und dem Monitor 14 ein Eingabemittel 19. Das insoweit beschriebene Teach-In-System 2 arbeitet wie folgt:

Es wird als Beispiel zunächst angenommen, dass noch kein Maschinensteuerprogramm vorliegt. Von dem Block 6 an das Teach-In-Modul 2 übergebene Daten beschreiben deshalb ein Werkstück in unbearbeitetem Zustand und wenigstens ein ausgesuchtes Werkzeug. Dieses wird gemeinsam mit dem Werkstück von dem Block 4 durch das Anzeigemittel 18 auf dem Monitor 14 veranschaulicht. Mit dem Eingabegerät werden nun Bewegungen der Darstellung des Werkstücks und/oder der Darstellung des Werkzeugs vorgegeben. Außerdem können SPS-Steuerbefehle ein- oder vorgegeben werden. Zu diesen gehören bspw. das Ein- und Ausschalten von Kühlmittelventilen. Die Bewegung der Darstellungen sowie die Eingabe der SPS-Steuerbefehle kann durch Tastatureingaben, bevorzugterweise jedoch durch Joystick- oder Mauseingaben in Verbindung mit einem auf dem Monitor 14 veranschaulichten Eingabemenü oder anderweitigen Darstellungen erfolgen. Die sich ergebenden Bewegungen werden als Daten aufgezeichnet und in Steueranweisungen für eine NC-Maschine übersetzt. Auf diese Weise entsteht in Block 5 Schritt für Schritt ein Maschinensteuerprogramm. Wenn Werkstück und Werkzeug alle gewünschten Positionen durchlaufen haben, ist der Teach-In-Vorgang beendet, und in Block 7 wird das fertige Maschinensteuerprogramm ausgegeben, das gewissermaßen durch die Spur der Relativbewegung von Werkstückdarstellung und Werkzeugdarstellung festgelegt ist. Das Maschinensteuerprogramm kann nun direkt an eine Werkzeugmaschine übertragen werden, die es dann abarbeitet.

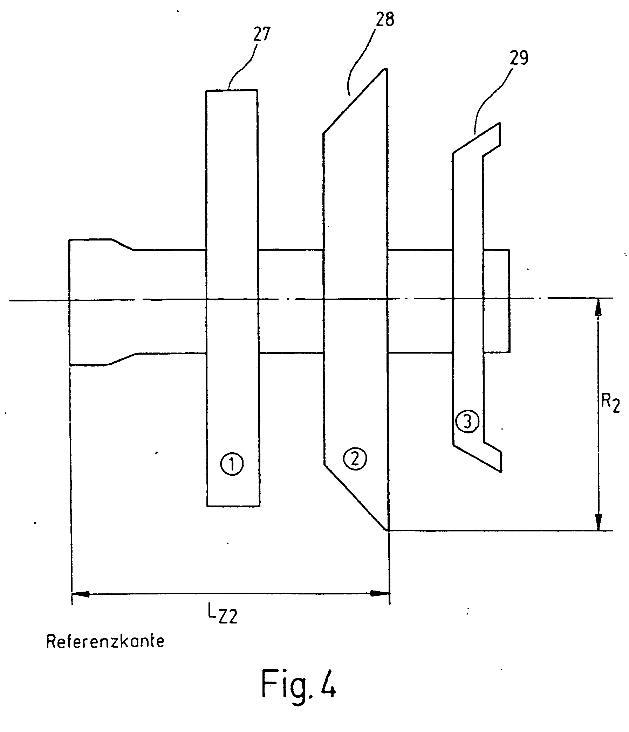

Entsprechend der Maschinenkinematik (Achsanordnung) der Werkzeugmaschine, auf der das Programm abgearbeitet werden soll, und entsprechend der Maschinengeometrie können entsprechende Daten in einem Konfigurationsmenü festgelegt werden. Weitere Konfigurationsdaten, wie die Beschreibung der Geometrie und Anordnung der Werkzeuge (Schleifscheiben) sowie die Geometrie des Werkstücks als auch der Spannmittel können über Schnittstellen von außen vorgegeben werden. Beispielsweise ist es möglich diese über Datenträger einzulesen. Zu den einzulesenden Daten, die einen Eingabedatensatz bilden, können folgende Daten gehören:
a) Werkzeugdaten: Beschreibung der Geometrie der Werkzeuge, insbesondere Beschreibung der Geometrie als Werkzeuge verwendeter Schleifscheiben und deren Position bei Montage in der Maschine. Insbesondere können einzelne Scheiben zu Scheibensätzen zusammengefasst werden, wie sie in Fig. 4 veranschaulicht sind. Diese Daten können in Dateien hinterlegt werden, die vorhanden sind oder bedarfsweise zur Verfügung gestellt werden. Die Daten können außerdem in einer Datenbank hinterlegt sein, die Teil des Teach-In-Systems ist oder bedarfsweise genutzt wird.
b) Spannmitteldaten: Beschreibung der Geometrie des Spannmittels des Werkstücks. Diese Daten können ebenfalls in Dateien bzw. in einer Datenbank hinterlegt werden.
c) Werkstückdaten: Beschreibung der Rohteilgeometrie des Werkstücks. Diese Daten wurden in Dateien bzw. in einer Datenbank hinterlegt. Alternativ oder ergänzend können Rohteilgeometrien aus einfachen, geometrischen Formen abgeleitet werden.
d) Maschinensteuerprogrammdaten (falls vorhanden): Beschreibung des verwendeten NC-Programms. Dieses liegt entweder als Datei vor oder kann über eine Kommunikationsschnittstelle über Datenträger oder Leitung an das Teach-In-System übertragen werden.
e) Maschinendaten: Beschreibung der Geometrie und der Achskonfiguration der eingesetzten Maschine.

Zu den ausgegebenen Daten gehören:
a) modifizierte Maschinensteuerprogrammdaten: Das abgewandelte oder neuerstellte Maschinensteuerprogramm wird als Datei ausgegeben. Ist das Teach-In-System Teil einer Werkzeugmaschine, wird es unmittelbar an die Maschinensteuerung übertragen. Ist das Teach-In-System Teil eines von einer Werkzeugmaschine entfernt angeordneten Rechners, kann es über Leitung oder Datenträger an die Maschinensteuerung übertragen werden.
b) Bildschirm: Die Abarbeitung sowie Abänderung des Maschinensteuerprogramms werden grafisch mit Materialabtrag auf dem Bildschirm dargestellt. Bei einer unerwünschten Kollision innerhalb der Maschine kann eine Warnmeldung ausgegeben und das Programm an der Stelle unterbrochen werden. Bedarfsweise kann die Programmzeile in der die Kollision auftrat, in eine Logdatei geschrieben werden.
c) generiertes Werkstückmodell: Das generierte Werkstückmodell kann an ein CAD-System oder ein anderes System zur Weiterverarbeitung übertragen werden.

Zur weiteren Veranschaulichung des Betriebs des virtuellen Teach-In-Systems ist in Figur 3 der Datenfluss des Systems schematisch veranschaulicht. Dabei ist lediglich ein Programmabschnitt veranschaulicht. Die Kommunikation des virtuellen Teach-in-Systems mit weiteren Systemkomponenten und der Systemstart wird von einem über- geordneten, nicht weiter veranschaulichten Programm wahrgenommen. Hierzu zählt bspw. auch die Übertragung des generierten Maschinensteuerprogramms an die Maschine.

Aus einem vorhandenen, ggfs. auch noch fragmentarischen Maschinensteuerprogramm von einem Festplattenspeicher oder einem als kontinuierlicher Datenstrom ankommenden Maschinensteuerprogramm werden in einem Verarbeitungsmodul Verfahrwege von Maschinenachsen generiert. In Figur 3 ist dies für fünf verschiedene Achsen X, Y, Z, A und C veranschaulicht. Das Verarbeitungsmodul erhält außerdem Daten über die Maschinengeometrie und Kinematik, die Scheibengeometrie, Spannmittel und die Werkstückgeometrie. Außerdem ist es mit dem Eingabemittel verbunden, mit dem der Benutzer eine Bedienung vornehmen, die Verarbeitung unterbrechen oder fortsetzen und bedarfsweise Programmzeilen oder Blöcke gezielt hinzufügen, löschen oder ändern kann. Aus diesen Daten erstellt das Verarbeitungsmodul ein Werkstückmodell, führt eine Kollisionsbetrachtung durch und berechnet die erforderliche Bearbeitungszeit. Diese sowie die Kollisionsbetrachtung und das Werkstückmodell werden durch das Anzeigemittel visualisiert. Die generierten Verfahrwege werden an das Speichermittel übergeben und somit auf der Festplatte aufgezeichnet. Sie können als Maschinensteuerprogramm an die Maschine übertragen oder in ein Maschinensteuerprogramm transformiert und danach an die Maschine übertragen werden.

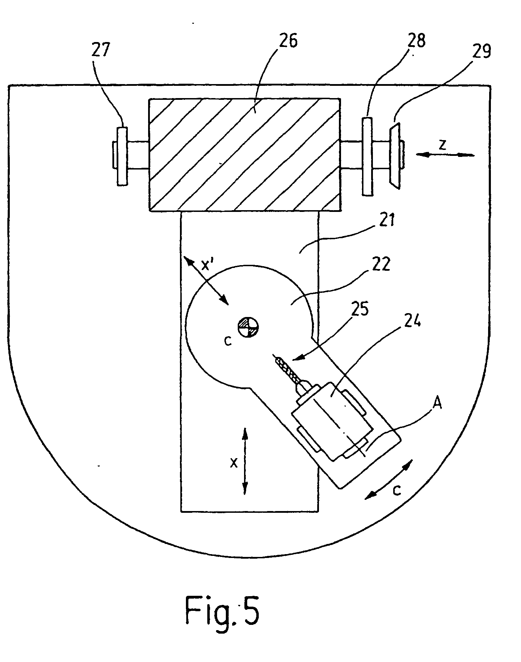

Die Maschine ist in Figur 5 schematisch in Draufsicht veranschaulicht. Sie weist ein Maschinenbett 21 auf, auf dem ein Werkstückträger 22 um eine Vertikalachse C schwenkbar gelagert ist. Der Werkstückträger 22 ist außerdem mittels einer weiteren NC-Achse X in einer Horizontalrichtung verstellbar. Außerdem trägt er eine Aufnahmeeinrichtung 24 für ein Werkstück 25, bspw. ein Bohrwerkzeug. An der Aufnahmeeinrichtung 24 kann bedarfsweise eine Drehpositioniereinrichtung vorgesehen werden, die eine weitere NC-Achse A darstellt.

In Nachbarschaft zu dem Werkstückträger 22 ist außerdem ein Schleifkopf 26 vorgesehen, der ein oder mehrere Schleifscheiben 27, 28, 29 trägt. Bedarfsweise ist der Schleifkopf 26 in einer mit der Drehachse der Schleifspindel übereinstimmenden Richtung mittels einer NC-Achse Z und linear in einer zu der C-Achse parallelen Richtung (NC-Achse Y) verstellbar. Das Werkstück 25 ist in Bezug auf den Werkstückträger 22 nicht linear verstellbar. Eine Axialbewegung (aus Sicht der Schleifscheiben 27, 28, 29) des Werkstücks 25 in Richtung X' kann durch Überlagerung von Bewegungen in Z-Richtung (Schleifkopfbewegung) und in X-Richtung (Werkstückträgerbewegung) erfolgen.

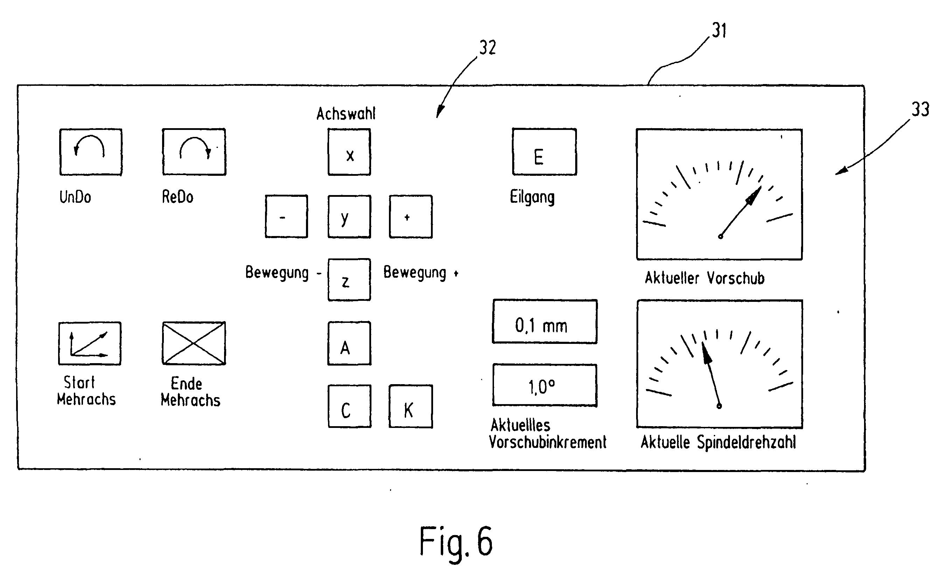

Zur interaktiven Teach-In-Programmierung dieser NC-Maschine dient das virtuelle Teach-In-Modul, dessen Bedienoberfläche in Figur 6 veranschaulicht ist. Die Darstellung veranschaulicht ein Bedienfeld 31 zur Anzeige durch das Anzeigemittel 14 auf einem Monitor. Das Bedienfeld 31 enthält mehrere Bedientastenfelder 32 sowie Anzeigefelder 33. Zu den Bedientastenfeldern gehören Tastenfelder X, Y, Z, A, C zur Auswahl von NC-Achsen der Schleifmaschine. Tasten "-" und "+" sowie "E" für Eilgang dienen der Steuerung der Bewegung. Das aktuelle Vorschubinkrement ist in Linearschritten oder Winkelschritten einstellbar. Eine Wiederholungstaste ReDo stellt den zuvor gelöschten Schritt wieder her. Ein weiteres Bedientastenfeld UnDo löscht den letzten eingegebenen Schritt. Zur weiteren Auswahl der Achsen ist außerdem ein Bedientastenfeld K vorgesehen, das eine konfigurierbare Achse kennzeichnet. Diese kann von den tatsächlich vorhandenen NC-Achsen abweichen und durch eine Überlagerung der Bewegung der verschiedenen tatsächlich vorhandenen Maschinenachsen X, Y, Z, A, C zusammengesetzt werden.

Sämtliche Bewegungen werden als Linearbewegungen zwischen zwei Punkten im Raum aufgefasst und durchgeführt. Änderungen von Winkelkoordinaten werden durch lineare Winkeländerungen dargestellt. Die Bewegungen der Maschinenachsen können entweder als Bewegung einer Achse oder der gleichzeitigen Bewegung mehrerer Achsen ausgeführt werden. Bei der Einzelbewegung wird eine Achse gewählt und bewegt sich entsprechend des gewählten Vorschubs und der Anzahl der Wiederholungen der Inkrementalbewegungen um die zugehörige Distanz. Die gleichzeitige Bewegung mehrere Achsen kann durch die Hintereinanderschaltung von Einzelachsbewegungen beschrieben werden. Dabei wird der Modus "Mehrachs-Bewegung" eingeschaltet und die Achsen nacheinander zum gewünschten Endpunkt verfahren. Anschließend wird der Modus "Mehrachs-Bewegung" ausgeschaltet und sämtliche (linearen) Bewegungen seit Einschalten der "Mehrachs-Bewegung" zu einer gleichzeitigen Bewegung aller beteiligten Achsen zusammengefasst.

Anstelle der Zusammenfassung von Einzelbewegungen von Maschinenachsen zu einer überlagerten Achsbewegung kann in einigen Fällen auch die "konfigurierbare Achse" genutzt werden. Diese ist aus den Maschinenachsen zusammengesetzt. Die konfigurierbare Achse existiert jedoch nicht als echte Achse. Die Bewegung entlang dieser Achse muss durch gleichzeitige Bewegung von einer oder mehr Maschinenachsen erzeugt werden. In den meisten Fällen ist es zweckmäßig, eine konfigurierbare Achse in die Mittelachse des Werkstücks zu legen. Somit ist die Bewegung des Werkzeugs (der Schleifscheibe) parallel zu den Werkstückachsen möglich. Eine Bewegung der Schleifscheibe entlang dieser Achse ist somit immer parallel zu der Werkstücklängsachse und muss nicht mehr als Kombinationsbewegung zweier Maschinenachsen programmiert werden, wie aus Figur 5 ersichtlich ist. Die konfigurierbare Achse wird wie eine Maschinenachse bedient. Im Maschinensteuerprogramm (NC-Programm) wird diese Bewegung jedoch aus den vorhandenen Maschinenachsen zusammengesetzt.

Die Definition der konfigurierbaren Achsen ist durch eine Konfigurationsdatei gegebenen. Die Konfigurationsdatei kann über ein Menü modifiziert werden. Somit können die konfigurierbaren Achsen leicht an unterschiedliche Maschinenkonfigurationen oder auch an die Bedürfnisse spezieller Werkzeuge oder Werkstücke angepasst werden. Dabei wird definiert, wie die jeweilige konfigurierbare Achse im Raum ausgerichtet ist und wie diese mit den Maschinenachsen gekoppelt ist.

Beim Verfahren des Scheibensatzes und des Werkstücks durch den Maschinenraum können Kollisionen auftreten. Die Kollisionen können unterteilt werden in:
Kollision der Schleifscheibe mit dem Werkstück im Eilgang,
Kollision der Schleifscheibe mit dem Werkstückträger bzw. Spannmittel und anderen Maschinenteilen,
Kollision des Werkstücks mit Maschinenteilen oder nicht zerspanenden Teilen der Schleifscheibe und
Kollision des Werkstücks mit einer Schleifscheibe, die nicht die aktuell zerspanende Scheibe darstellt.

Solche Kollisionen sind insbesondere dann interessant, wenn vorhandene NC-Programme analysiert werden. Die Kollisionsbetrachtung kann während der Abarbeitung des NC-Programms sowohl in Einzelschrittverarbeitung als auch in kontinuierlicher Verarbeitung zugeschaltet werden. Sie muss jedoch nicht zwingend eingeschaltet sein und stellt somit eine optionale Eigenschaft des Systems dar.

Für die Kollisionsbetrachtung sind zwei verschiedene Betriebsarten möglich:
a) Online-Modus: Die Grafik wird bei der Kollisionsberechnung dargestellt und der Materialabtrag aktualisiert. Bei einer Kollision stoppt die Programmverarbeitung und es wird eine Warnmeldung ausgegeben.
b) Offline-Modus: Die Kollisionsberechnung wird ohne Grafik durchgeführt und Kollisionen werden in eine Logdatei ausgegeben.

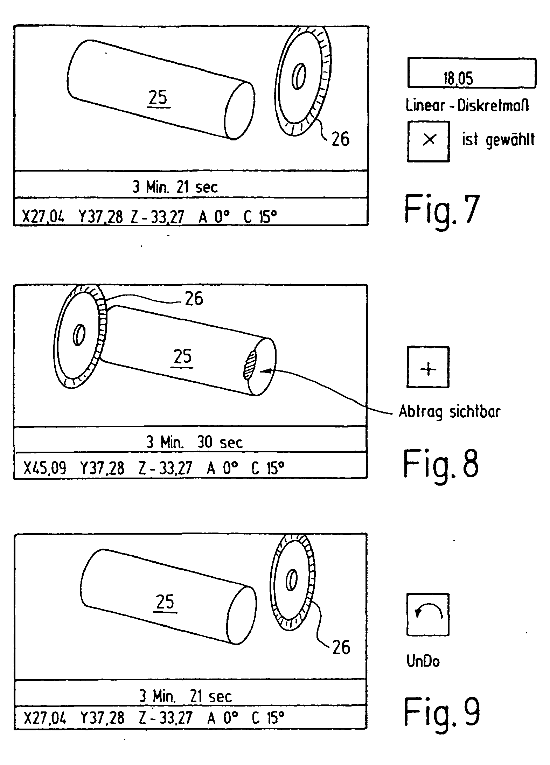

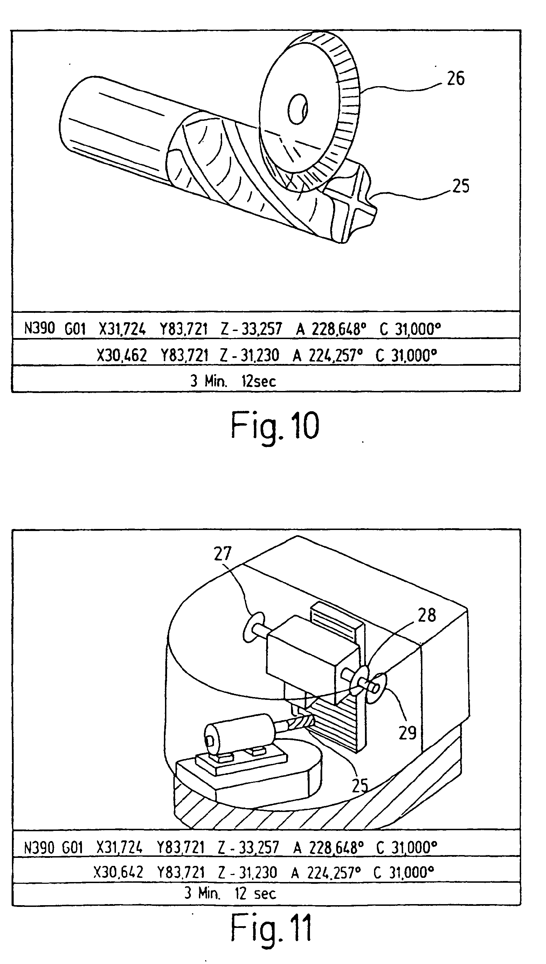

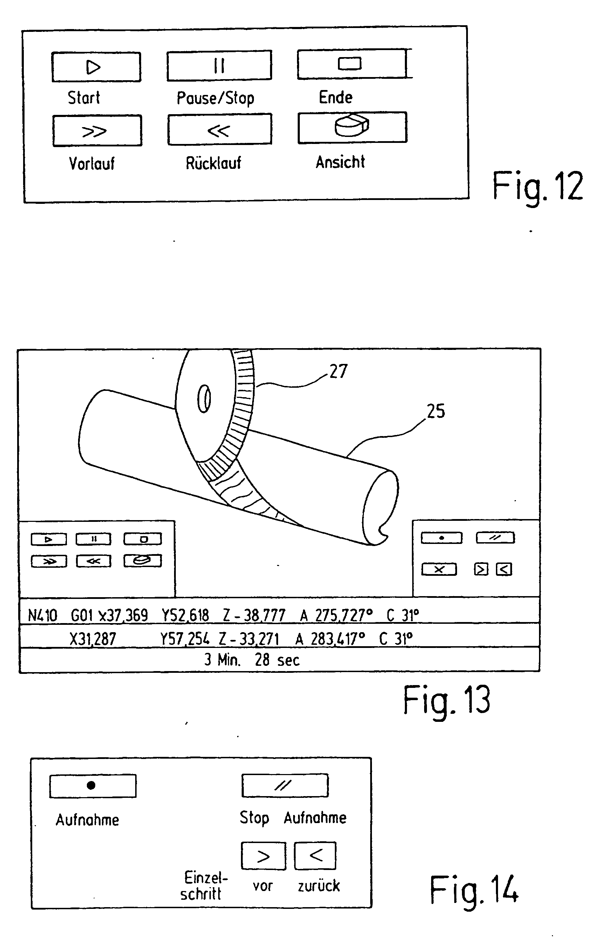

Die Aufnahme von gewünschten Werkstückbewegungen geht aus den Figuren 6 bis 14 hervor. Es wird bspw. von einem vorhandenen Maschinensteuerprogramm ausgegangen. Dieses kann mittels eines Simulationslaufs visualisiert werden. Dazu dient das in Figur 12 veranschaulichte Bedienfeld, das auf dem Monitor dargestellt wird. Das Ergebnis der Simulation kann bspw. eine in Figur 10 veranschaulichte Werkstückansicht sein. Optional kann auf die Ansicht der Gesamtmaschine umgeschaltet werden, wie es in Figur 11 veranschaulicht ist. Ist das Bearbeitungsergebnis wie gewünscht, kann das NC-Programm unverändert bleiben. Soll es verändert werden, kann der Simulationslauf an einer gewünschten Stelle unterbrochen werden und in das virtuelle Teach-In-Betriebsart gewechselt werden. Dies ist in Figur 13 und 14 veranschaulicht. Das zusätzlich zu dem Bedienfeld nach Figur 12 vorhandene Bedienfeld nach Figur 14 gestattet die Aufzeichnung von Bewegungen der Schleifscheibe und/oder des Werkstücks, die mittels eines Eingabegeräts, wie bspw. eines Joysticks oder einer Maus, eingebbar sind. Die eingegebenen Bewegungen werden nach Drücken des Bedientastenfelds "Aufnahme" in eine Maschinensteuerprogrammzeile oder mehrere Maschinensteuerprogrammzeilen sowie die zugehörigen Daten übersetzt.

Während des kontinuierlichen Simulationslaufs (Fig. 12) wird das Maschinensteuerprogramm kontinuierlich abgearbeitet und es können folgende Aktionen durch den Benutzer ausgelöst werden:
a) Start bzw. Fortsetzung der Abarbeitung des Maschinensteuerprogramms: Die Abarbeitung wird gestartet oder nach einem Zwischenstop fortgesetzt.
b) Zwischenstop der Abarbeitung des Maschinensteuerprogramms: Die Abarbeitung wird unterbrochen, kann jedoch fortgesetzt werden.
c) Beenden der Abarbeitung des Maschinensteuer-Programms: Die Abarbeitung wird beendet und kann nur durch Neustart wieder begonnen werden.
d) Schneller Vorlauf der Abarbeitung des Maschinensteuerprogramms: Mehrere Programmsätze werden übersprungen. Falls gewünscht kann zur nächsten Bearbeitungsoperation gesprungen werden.
e) Schneller Rücklauf der Abarbeitung des Maschinensteuerprogramms: Mehrere Programmsätze werden zurückgespult. Falls gewünscht, kann zur vorigen Bearbeitungsoperation gesprungen werden. Dabei wird die Grafik um die entsprechenden Operationen zurückgesetzt und das Werkstück so dargestellt, wie es bei der Abarbeitung der entsprechenden Maschinensteuerprogrammzeile aussieht. Die Bearbeitungszeit wird ebenfalls zurückgesetzt.
f) Umschaltung zwischen Ansicht mit und ohne Maschinenraum.

Die Einzelschrittverarbeitung des Maschinensteuerprogramms kann durch Drücken der Zwischenstoptaste ausgelöst werden. Die Schleifscheibe bleibt in der aktuellen Position stehen und es wird die aktuelle Maschinensteuerprogrammzeile und die bislang verstrichene Bearbeitungszeit angezeigt. Folgende Aktionen können ausgelöst werden:
a) Einzelschritt vor: Es erfolgt die Abarbeitung der nächsten Programmzeile. Grafik und Bearbeitungszeit werden aktualisiert.
b) Einzelschritt zurück: Die Verarbeitung des Programms wird um eine Zeile zurückgesetzt. Grafik und Bearbeitungszeit werden aktualisiert, d.h. gegebenenfalls vorhandener Materialabtrag wird rückgängig gemacht und die Schleifzeit wird zurückgesetzt.
c) Start/Aufnahme: Das System geht in den Aufnahmemodus. Ab sofort werden alle manuell vorgegebenen Maschinenbewegungen aufgezeichnet und gespeichert. Die Grafik wird auch hier aktualisiert.
d) Stop/Aufnahme: Der Aufnahmemodus und damit die Aufzeichnung der vom Benutzer vorgegebenen Bewegungen wird beendet.

Das Simulations- und/oder Teach-In-Modul berechnen die Bearbeitungszeit und geben die seit Programmstart verstrichene Schleifzeit in einer Statuszeile aus. Die Schleifzeit wird mit Abarbeitung jeder Maschinensteuerprogrammzeile aktualisiert. Wie bei der Kollisionsbetrachtung wird zwischen Offlinemodus und Onlinemodus unterschieden, d.h. die Bearbeitungszeit kann unmittelbar angezeigt oder in eine Datei geschrieben werden. Außerdem wird die aktuelle Programmzeile sowie die Ist-Position der Maschinenachsen angezeigt.

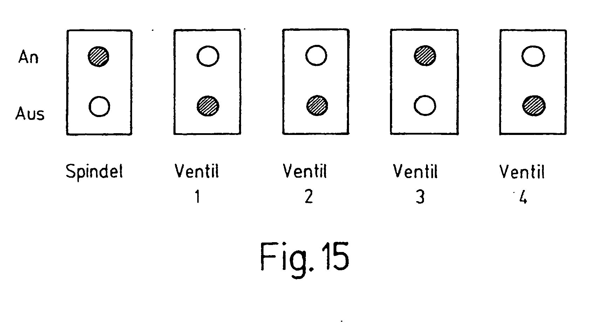

Bedarfsweise können Maschinensteuerprogrammzeilen direkt oder indirekt durch grafische Manipulation eingegeben werden. Entsprechend wird der SPS-Zustand beeinflusst. Es können bspw. die Schleifscheibenspindel oder die Kühlmittelventile ein- und ausgeschaltet werden. Diese Reaktionen können in einem SPS-Zustandsmonitor veranschaulicht werden, wie er in Fig. 15 dargestellt ist. Der Zustandsmonitor veranschaulicht die aktuellen Zustände der SPS-Eingänge und Ausgänge. Der Zustand der Ausgänge kann durch entsprechende Bedienelemente geändert werden, wobei diese Änderungen dann in das aktuelle NC-Programm übertragen werden.

Das Werkstückmodell sowie das Maschinen- und das Scheibenmodell können jederzeit mit der Maus vermessen werden. Dabei werden Punkte im Raum durch Anklicken einer Fläche oder Kante selektiert, deren Abstand bzw. Winkel zueinander auf dem Bildschirm ausgegeben wird.

Mit Hilfe einer Ebene kann eine zweidimensionale Schnittansicht des Werkstücks erzeugt werden, die anschließend vermessen werden kann. Die Ebene kann entweder beliebig oder entsprechend einer Randbedingung z.B. parallel zur X-Achse gewählt werden. Somit kann bspw. bei einem Schnitt senkrecht zur Längsachse des Werkstücks die Stollenbreite oder der Spanwinkel des Spanraums gemessen werden.

Bedarfsweise kann es zweckmäßig sein, die Modellierung des gewünschten Werkstücks durch Manipulation einer durch die Bewegung der Schleifscheibe durch den Raum erzeugten (überstrichenen) Fläche zu ermöglichen. Die Spur der Schleifscheibe (Sweptsurface) gibt ein Volumen, das beliebig verschoben und gedreht werden kann. Die Einschränkung der Verschiebungen und Drehungen durch Randbedingungen, bspw. die Verschiebung des Volumens entlang einer Koordinatenachse, bis dieses das Werkstück in mindestens einem Punkt berührt, kann die Modellierung vereinfachen. Andere Berührflächen, bspw. Ebenen, sind möglich. Anschließend kann bspw. um einen bestimmten Betrag entlang der Oberfläche das Volumen um einen bestimmten Betrag entlang der Oberfläche normal in das Werkstück hineinbewegt werden, so dass sich eine definierte Abtragtiefe ergibt. Bei dieser Modellierungsart wird das gewünschte Maschinensteuerprogramm vollständig erzeugt oder vervollständigt.

Ein virtuelles Teach-In-Modul zur Programmierung von Schleifmaschinen oder anderweitigen Werkzeugmaschinen enthält eine grafische Benutzeroberfläche. Diese beinhaltet die visuelle Darstellung von Rohlingen, Werkstücken und/oder Werkzeugen. Die dargestellten Elemente sind durch entsprechende Bedienelemente willkürlich in Bezug aufeinander verschiebbar. Die sich ergebenden Verschiebungen werden von dem virtuellen Teach-In-Modul aufgezeichnet und in ein Maschinensteuerprogramm übersetzt oder es wird ein vorhandenes Maschinensteuerprogramm anhand der Verschiebungen verändert.

## Patentansprüche

1. System (1) zur Erzeugung, Veränderung und/oder Visualisierung von Programmen zur Steuerung von Schleifmaschinen,
mit einem Teach-In-Modul (2), das eine visuelle Darstellung eines Werkstücks (25) und eines Schleifwerkzeugs (27, 28, 29) auf einem Anzeigemittel (18) erbringt, die Manipulation der Darstellung durch Bewegung des dargestellten Werkstücks (25) und des dargestellten Schleifwerkzeugs (27, 28, 29) zueinander gestattet und anhand der Manipulation ein Maschinensteuerprogramm (NC-Programm) erzeugt oder verändert und den Materialabtrag modelliert sowie auf dem Anzeigemittel (18) darstellt
**dadurch gekennzeichnet,**
**dass** ein Mittel zur Bestimmung der sich ergebenden werkstückabmessungen anhand der visuellen Darstellung des virtuell bearbeiteten Werkstücks (25) durch Ausmessen der visuellen Darstellung des virtuell bearbeiteten Werkstücks (25) vorgesehen ist und
**dass** zur Vermessungen interaktiv nutzbare Marker vorgesehen sind, wobei durch das Mittel willkürlich Punkte des Werkstücks (25) auswählbar sind, wobei das Mittel dann Maßbeziehungen zwischen den Punkten bestimmt.

2. System nach Anspruch 1, **dadurch gekennzeichnet, dass** das Teach-In-Modul folgende Elemente aufweist:
ein Speichermittel (17),
- das zur Speicherung von Werkstückdaten eingerichtet ist, die ein Werkstück in einem Bearbeitungszustand kennzeichnen,
- das außerdem zur Speicherung von Werkzeugdaten eingerichtet ist, die ein Werkzeug kennzeichnen, und
- das zur Speicherung von Anweisungen eingerichtet ist, die ein oder mehrere Relativbewegungen zwischen Werkzeug und Werkstück kennzeichnen,
ein Rechenmittel (16), das dazu eingerichtet ist, anhand der Anweisungen die Werkstückdaten und/oder die Werkzeugdaten und/oder Daten über die Position von Werkstück und Werkzeug in einer Weise zu verändern, die einer Bearbeitung des Werkstücks (25) durch das Werkzeug (27) gemäß der Relativbewegung entspricht,
wobei das Anzeigemittel (18) dazu eingerichtet ist, anhand der Werkstückdaten und der Werkzeugdaten eine visuelle Darstellung des Werkzeugs und des Werkstücks sowie seiner Relativbewegung zu geben, und
ein Eingabemittel (19), das dazu eingerichtet ist, die von dem Anzeigemittel darzustellende Relativbewegung zwischen Werkzeug (27) und Werkstück (25) und dementsprechend die Anweisungen zu ändern, die die Relativbewegungen kennzeichnen.

3. System nach Anspruch 2, **dadurch gekennzeichnet, dass** ein Transformationsmittel zur Umwandlung der Anweisungen in das Maschinensteuerprogramm (NC-Programm) vorgesehen ist.

4. System nach Anspruch 2, **dadurch gekennzeichnet, dass** die Anweisungen durch eine Folge von Programmbefehlen gebildet sind, die das Maschinensteuerprogramm bilden.

5. System nach Anspruch 1, **dadurch gekennzeichnet, dass** bei der Manipulation der Darstellung das Maschinensteuerprogramm verändert wird.

6. System nach Anspruch 5, **dadurch gekennzeichnet, dass** bei der Veränderung des Maschinensteuerprogramms Informationen oder Daten über die Richtung, den Weg und/oder die Geschwindigkeit einer Bewegung des Werkstücks und/oder des Werkzeugs geändert werden.

7. System nach Anspruch 2 und 3, **dadurch gekennzeichnet, dass** das Transformationsmittel Teil des Rechenmittels (16) ist.

8. System nach Anspruch 2, **dadurch gekennzeichnet, dass** das Speichermittel (17), das Rechenmittel (16), das Anzeigemittel (18) und das Eingabemittel (19) jeweils ein Programm oder ein Programmabschnitt in Verbindung mit dem von ihm genutzten Teil eines Rechners ist.

9. System nach Anspruch 2, **dadurch gekennzeichnet, dass** das Eingabemittel (19) ein als manuelle Eingabeschnittstelle eingerichtetes Gerät (15) und ein Bedienfeld sowie ein Programm oder einen Programmabschnitt zum Betrieb des Geräts (15) und des Bedienfelds aufweist, wobei das Bedienfeld vorzugsweise eine von einer Anzeigeeinrichtung (14) wiederzugebende Darstellung mit Bedientastenfeldern (32) und bedarfsweise mit Anzeigefeldern (23) ist.

10. System nach Anspruch 9, **dadurch gekennzeichnet, dass** einzelnen Bedientastenfeldern Maschinenachsen (X, X', Z, C) zugeordnet sind.

11. System nach Anspruch 9, **dadurch gekennzeichnet, dass** Bedientastenfelder (32) vorgesehen sind, denen konfigurierbare Achsen (K) zugeordnet werden können, die eine aus mehreren Maschinenachsbewegungen zusammengesetzte Bewegung bestimmen.

12. System nach Anspruch 2, **dadurch gekennzeichnet, dass** das Speichermittel (17) eine Bibliothek enthält, die Daten eines oder mehrerer Rohlinge sowie Daten, die ein oder mehrere Werkzeuge kennzeichnen, enthält.

13. System nach Anspruch 2, **dadurch gekennzeichnet, dass** das Anzeigemittel einen SPS-Zustandsmonitor enthält, der den aktuellen Zustand aller Eingänge und Ausgänge des Maschinensteuerprogramms (SPS) visualisiert.

14. System nach Anspruch 1, **dadurch gekennzeichnet, dass** das System zusätzlich ein Simulationsmodul enthält, das eine visuelle Darstellung eines Bearbeitungsvorgangs erbringt, der einem vorhandenen Maschinensteuerprogramm entspricht und der durch einen Materialabtrag an dem Werkstück charakterisiert ist.

15. System nach Anspruch 14, **dadurch gekennzeichnet, dass** das Simulationsmodul Teil des Teach-In-Moduls ist.

16. System nach Anspruch 14, **dadurch gekennzeichnet, dass** das Simulationsmodul ein Bedienfeld (Fig. 12) aufweist, das vorzugsweise eine von einer Anzeigeeinrichtung (14) wiederzugebende Darstellung mit Bedientastenfeldern und bedarfsweise mit Anzeigefeldern ist.

17. System nach Anspruch 14, **dadurch gekennzeichnet, dass** das Simulationsmodul die Simulationsunterbrechung, -Wiederholung, -Beschleunigung, -Verlangsamung oder die schrittweise Darstellung gestattet.

18. System nach Anspruch 1 oder 14, **dadurch gekennzeichnet, dass** die visuelle Darstellung auf das Werkzeug und das Werkstück beschränkt ist oder der Maschinenraum einbezogen ist.

19. System nach Anspruch 1, **dadurch gekennzeichnet, dass** das System ein Kollisionsberechnungsmodul enthält.

20. System nach Anspruch 1, **dadurch gekennzeichnet, dass** das System ein Zeitberechnungsmodul (2b) enthält.

21. System nach Anspruch 1 oder 14, **dadurch gekennzeichnet, dass** das System Teil einer Schleifmaschine ist.

## Claims

1. System (1) for the generation, modification and/or visualisation of programs for controlling grinding machines,
with a teach-in module (2), which provides a visual representation of a workpiece (25) and a grinding tool (27, 28, 29) on a display means (18), allows manipulation of the representation by moving the displayed workpiece (25) and the displayed grinding tool (27, 28, 29) relative to one another, and on the basis of the manipulation generates or modifies a machine control program (NC program) and displays the removal of material in model form and on the display means (18)
**characterised in that**
a means for determining the resulting workpiece dimensions on the basis of the visual representation of the virtually machined workpiece (25) by measuring the visual representation of the virtually machined workpiece (25) is provided, and
that interactively usable markers are provided for the measurements, wherein points of the workpiece (25) can be randomly selected through the means, wherein the means then determines dimensional relations between the points.

2. System according to Claim 1, **characterised in that** the teach-in module has the following elements:
a memory element (17),
• which is arranged to store workpiece data, which identify a workpiece in a machining state,
• which is additionally arranged to store tool data, which identify a tool, and
• which is arranged to store instructions, which identify one or more relative movements between the tool and workpiece,
an arithmetic unit (16), which is arranged to modify the workpiece data and/or the tool data and/or data relating to the position of the workpiece and tool on the basis of the instructions in a manner corresponding to machining of the workpiece (25) by the tool (27) in accordance with the relative movement, wherein the display means (18) is arranged to provide a visual representation of the tool and the workpiece as well as its relative movement on the basis of the workpiece data and the tool data, and
an input means (19), which is arranged to change the relative movement between the tool (27) and workpiece (25) to be represented by the display means and accordingly change the instructions, which identify the relative movements.

3. System according to Claim 2, **characterised in that** a transformation means is provided to transform the instructions into the machine control program (NC program).

4. System according to Claim 2, **characterised in that** the instructions are formed by a sequence of program commands, which form the machine control program.

5. System according to Claim 1, **characterised in that** the machine control program is modified during manipulation of the representation.

6. System according to Claim 5, **characterised in that** information or data relating to the direction, path and/or speed of a movement of the workpiece and/or the tool are changed during modification of the machine control program.

7. System according to Claim 2 and 3, **characterised in that** the transformation means is part of the arithmetic unit (16).

8. System according to Claim 2, **characterised in that** the memory means (17), the arithmetic unit (16), the display means (18) and the input means (19) are each a program or program section in association with the part of a computer used by them.

9. System according to Claim 2, **characterised in that** the input means (19) has a device (15) fitted as a manual input interface and a control panel as well as a program or a program section for operation of the device (15) and the control panel, wherein the control panel is preferably a representation to be reproduced by a display system (14) with keypads (32) and, where necessary, display fields (23).

10. System according to Claim 9, **characterised in that** machine axes (X, X', Z, C) are assigned to individual keypads.

11. System according to Claim 9, **characterised in that** keypads (32) are provided, to which configurable axes (K) can be assigned, which determine a movement comprising several machine axis movements.

12. System according to Claim 2, **characterised in that** the memory means (17) includes a library, which contains the data of one or more blanks as well as data, which identify one or more tools.

13. System according to Claim 2, **characterised in that** the display means includes an SPS status monitor, which visualises the present status of all inputs and outputs of the machine control program (SPS).

14. System according to Claim 1, **characterised in that** the system additionally includes a simulation module, which provides a visual representation of a machining process, which corresponds to an existing machine control program and which is represented by a removal of material on the workpiece.

15. System according to Claim 14, **characterised in that** the simulation module is a part of the teach-in module.

16. System according to Claim 14, **characterised in that** the simulation module has a keypad (Figure 12), which is preferably a representation to be reproduced by a display system (14) with keypads and, where necessary, display fields.

17. System according to Claim 14, **characterised in that** the simulation module permits interruption, repetition, acceleration, deceleration of the simulation or step-by step display.

18. System according to Claim 1 or 14, **characterised in that** the visual representation is limited to the tool and the workpiece or the machine room is included.

19. System according to Claim 1, **characterised in that** the system includes a collision calculation module.

20. System according to Claim 1, **characterised in that** the system includes a time calculation module (2b).

21. System according to Claim 1 or 14, **characterised in that** the system is part of a grinding machine.

## Revendications

1. Système (1) pour générer, modifier et/ou visualiser des programmes pour la commande de machines à rectifier,
comportant un module d'apprentissage (2), qui produit une représentation visuelle d'une pièce (25) et d'un outil à rectifier (27, 28, 29) sur un moyen d'affichage (18), permet la manipulation de la représentation par déplacement de la pièce (25) représentée et de l'outil à rectifier (27, 28, 29) représenté l'un par rapport à l'autre, et, sur la base de la manipulation, génère ou modifie un programme de commande de machine (programme CN) et modélise l'enlèvement de matière et le représente sur le moyen d'affichage (18),
**caractérisé par le fait**
**qu'**il est prévu un moyen pour déterminer les cotes de pièce obtenues sur la base de la représentation visuelle de la pièce (25) usinée virtuellement par mesurage de la représentation visuelle de la pièce (25) usinée virtuellement et
**qu'**il est prévu pour les opérations de mesurage des marqueurs utilisables de manière interactive, des points arbitraires pouvant être sélectionnés par le moyen et le moyen déterminant ensuite des relations dimensionnelles entre les points.

2. Système selon la revendication 1, **caractérisé par le fait que** le module d'apprentissage comprend les éléments suivants :
un moyen de mémoire (17)
- qui est agencé pour mémoriser des données de pièce, qui caractérisent une pièce dans un état d'usinage,
- qui est agencé en outre pour mémoriser des données d'outil, qui caractérisent un outil, et
- qui est agencé pour mémoriser des instructions, qui caractérisent un ou plusieurs déplacement(s) relatif(s) entre outil et pièce,
un moyen de calcul (16), qui est agencé pour modifier sur la base des instructions, les données de pièce et/ou les données d'outil et/ou des données concernant la position de la pièce et de l'outil d'une manière qui corresponde à un usinage de la pièce (25) par l'outil (27) conformément au déplacement relatif,
le moyen d'affichage (18) étant agencé pour produire, sur la base des données de pièce et des données d'outil, une représentation de l'outil et visuelle de la pièce ainsi que de son déplacement relatif, et
un moyen d'entrée (19) qui est agencé pour modifier le déplacement relatif entre pièce (27) et outil (25) à représenter par le moyen d'affichage modifier en conséquence les instructions qui caractérisent les déplacements relatifs.

3. Système selon la revendication 2, **caractérisé par le fait qu'**il est prévu un moyen de transformation pour convertir les instructions en programme de commande de machine (programme CN).

4. Système selon la revendication 2, **caractérisé par le fait que** les instructions sont formées d'une suite d'ordres qui constituent le programme de commande de machine.

5. Système selon la revendication 1, **caractérisé par le fait que** lors de la manipulation de la représentation le programme de commande de machine est modifié.

6. Système selon la revendication 5, **caractérisé par le fait que** lors de la modification du programme de commande de machine des informations ou des données concernant la direction, la course et/ou la vitesse d'un déplacement de la pièce et/ou de l'outil sont modifiées.

7. Système selon revendications 2 et 3, **caractérisé par le fait que** le moyen de transformation fait partie du moyen de calcul.

8. Système selon la revendication 2, **caractérisé par le fait que** le moyen de mémoire (17), le moyen de calcul (16), le moyen d'affichage (18) et le moyen d'entrée (19) sont chacun un programme ou une partie de programme associé à la partie d'un calculateur utilisée par celui-ci.

9. Système selon la revendication 2, **caractérisé par le fait que** le moyen d'entrée (19) comporte un appareil agencé en interface d'entrée manuelle et un pupitre ainsi qu'un programme ou une partie de programme pour faire fonctionner l'appareil (15) et le pupitre, le pupitre étant de préférence une représentation affichable par un dispositif d'affichage avec des zones boutons (32) et le cas échéant des zones d'affichage (23).

10. Système selon la revendication 9, **caractérisé par le fait qu'**à différentes zones boutons sont associés des axes de machine (X, X', Z, C).

11. Système selon la revendication 9, **caractérisé par le fait qu'**il est prévu des zones boutons (32) auxquelles peuvent être associés des axes (K) configurables qui déterminent un déplacement composé de plusieurs déplacements d'axe de machine.

12. Système selon la revendication 2, **caractérisé par le fait que** le moyen de mémoire (17) comprend une bibliothèque qui contient des données d'une ou plusieurs ébauches ainsi que des données qui caractérisent un ou plusieurs outils.

13. Système selon la revendication 2, **caractérisé par le fait que** le moyen d'affichage comprend un moniteur d'état SPS qui visualise l'état actuel de toutes les entrées et sorties du programme de commande de machine (SPS).

14. Système selon la revendication 1, **caractérisé par le fait que** le système comprend en outre un module de simulation, qui fournit une représentation visuelle d'une opération d'usinage qui correspond à un programme de commande de machine existant et est **caractérisée par** un enlèvement de matière sur la pièce.

15. Système selon la revendication 14, **caractérisé par le fait que** le module de simulation fait partie du module d'apprentissage.

16. Système selon la revendication 14, **caractérisé par le fait que** le module de simulation comporte un pupitre (figure 12) qui de préférence est une représentation produite par un dispositif d'affichage (14) avec des zones boutons et les cas échéant des zones d'affichage.

17. Système selon la revendication 14, **caractérisé par le fait que** le module de simulation permet l'interruption, la répétition, l'accélération, le ralentissement ou la représentation pas à pas de la simulation.

18. Système selon la revendication 1 ou 14, **caractérisé par le fait que** la représentation visuelle est limitée à la pièce et à l'outil ou que l'enceinte machine est prise en compte.

19. Système selon la revendication 1, **caractérisé par le fait que** le système comprend un module de calcul de collision.

20. Système selon la revendication 1, **caractérisé par le fait que** le système comprend un module de calcul de temps.

21. Système selon la revendication 1, **caractérisé par le fait que** le système fait partie d'une machine à rectifier.
